# EUROPEAN PATENT SPECIFICATION

(11) **EP 1 855 445 B1**
(45) Date of publication and mention of the grant of the patent: **23.03.2016**
(21) Application number: 07001554.0
(22) Date of filing: 25.01.2007
(51) Int. Cl.: H04L 29/08, H04M 3/42

(54) **Session presence information management**
Verwaltung von Präsenzinformationen von Sitzungen
Procédé et sytème de traitement d'information de présence de média sessions

(30) Priority: 31.03.2006 US 278228
(43) Date of publication of application: 14.11.2007
(73) Proprietor: ALCATEL LUCENT, 92100 Boulogne-Billancourt (FR)
(72) Inventor: Jachner, Jack, MA 02420 Lexington (US)
(74) Representative: Wetzel, Emmanuelle

(56) References cited:
- EP-A- 1 435 722
- EP-A- 1 441 486
- EP-A- 1 589 717
- US-A1- 2003 110 228
- SCHULZRINNE COLUMBIA U P KYZIVAT CISCO V GURBANI LUCENT J ROSENBERG DYNAMICSOFT H: "RPIDS -- Rich Presence Information Data Format for Presence Based on the Session Initiation Protocol (SIP) 01.txt" IETF STANDARD-WORKING-DRAFT, INTERNET ENGINEERING TASK FORCE, IETF, CH, no. 1, 18 February 2003 (2003-02-18), XP015005195 ISSN: 0000-0004
- CAMPBELL DYNAMICSOFT S OLSON MICROSOFT J PETERSON NEUSTAR B ET AL: "SIMPLE Presence Publication Mechanism" IETF STANDARD-WORKING-DRAFT, INTERNET ENGINEERING TASK FORCE, IETF, CH, no. 1, 24 October 2002 (2002-10-24), XP015033457 ISSN: 0000-0004

## Description

### BACKGROUND OF THE INVENTION

Presence is generally defined as the knowledge that a person is available via, for example, a certain device over a particular medium as soon as the user connects to the network. For instance, via presence information, it may be ascertained that the person is available online, and on a connected device with a certain device profile. Currently presence is only used to communicate the state information of a specific person or an entity. A user which indicates its presence on the network is termed a presentity. Presence is used to notify a group of watchers (users) in a contact list about the state of person, including availability. When the user changes its presence state, each contact on the contact list is informed about the new presence state of the user.

European Patent Application EP 1 435 722 discloses a method and a system comprising the features of the preamble of claims 1 and 8, respectively. Presence messaging and communication techniques allow a variety of communication agents to cooperate with one another to provide distributed services. Since there is no uniform, standard based manner, in which to achieve an interaction between the agents on the application level, each of the participating devices is associated with a logic entity, referred to as a presentity, which subscribes to notification services for the other participating devices. When a state change occurs on any one of the participating devices, the corresponding presentity notifies the other devices of the state change. As such, each participating device knows the status of the other participating devices via the presentities and can systematically determine when and how to provide services based on its current state and the current state of the other participating devices.

European Patent Application EP 1 589 717 also discloses a presence system providing presence information. The presence information refers to information representing a state of a device, or the state of a user of a device (e.g. "online" or "offline").

European Patent Application EP 1 441 486 discloses a presence system that can change presence information for a presentity automatically by using as a trigger a change occurring in the presence information for another presentity. A presence change rule holding part holds a presence change rule; and a presence calculating part changes the presence information for the presentity. The presence information of the other presentity is acquired by a watcher. The change in presence information is done in accordance with the presence change rule held by the presence change rules holding part.

Previously, presence was associated only with the state of a person or an entity. The present invention is generally related to extending presence to a session itself; recasting sessions to take the form of a presentity allows for more varied interactions between devices, presentations and controls.

Therefore, what is needed is a system, method, and computer readable medium of extending presence to enable the session itself to take the form of a presentity, and more specifically, to represent sessions to users as presentities for the benefit of convenient and accessible display, storage and control of media sessions through clients.

### SUMMARY OF THE INVENTION

The present invention broadens presence systems and Media Session Management Systems (MSMS) (e.g. voice switches, Internet Messaging (IM) applications, video bridges, conferencing and collaboration servers, multi media session managers, and the like) by featuring sessions to users as presentities for the benefit of convenient and accessible display, storage and control of media sessions through clients to be distributed by presence systems to multiple users and devices.

Presence systems distribute the presence state of presentities (presence entities) to subscribed users (watchers) for display on a client. These presentities are typically human users with presence states such as on-line, on-the-phone or out-to-lunch.

The clients typically allow a media session to be created between two or more users, for example by one user, on his client, clicking on the corresponding icon of another user, to establish an IM, telephony, collaboration or video session. The presence state of each of the users involved in the session may then change to be "on the phone" or "using video" or "in conference." This is the presence of the users, not media session presence.

Collaboration applications may schedule a conference to include several users; however, these applications do not provide the conference with a presence state which users can access or control from presence systems.

Classical telephony systems such as Private Branch Exchange (PBX) and key systems have the Multi Line Appearance (MLA) feature, which indicates the state of several lines on multiple terminals - each line has several states - idle, ringing, busy, on-hold, etc., and a user at a terminal can view the state of the line and may access the call by pushing the corresponding button on the terminal. Typical user behavior in a small office includes the following steps: the terminals ring, one of the users answers, inquires about the destination user of the call, puts the caller on hold, and communicates verbally to the appropriate user such as, "Bob, call for you on line 2." MLA displays and controls voice telephony states of the line, which is much more restrictive than the session and which is not tied to lines, (e.g. a user may change devices during a session), and not tied to voice as media (IM, collaboration, video, in combination). These MLA features are also implemented in proprietary PBX and key systems.

Call centers associate incoming customer calls with prior customer interaction data using Customer Relationship Management (CRM) applications. The association is performed using the customer calling number, and/or customer entered customer identification data. This call associated data is then provided to the customer service agent, or multiple agents as required to process the customer call, so that the agents have additional information to improve customer service. This call associated data is not linked to presence systems in existing call center systems.

The basic premise is to link media session management systems with presence systems to represent media sessions as presentities to users of a presence system, for session viewing and control through a presence system client.

The presence of a media session is rich, as it is composed of many elements of the session, such as current session state (scheduled, initiating, on-going, leader speaking, ad hoc), number of participants (total invited, currently attending, number active vs. passive), identifying information on participants (name, telephone number), presence of each participant, as it relates to the session (e.g. each has video capability), media comprising the session (IM, voice, video, document sharing, and combinations), session subject or title (weekly staff meeting), and session associated information, in the call center scenario (CRM info). The rich session presence may be distributed and stored as eXtensible Markup Language (XML). Session presence may be used for the information of users or to control applications and systems.

The presence of sessions is published to a session specific presence agent within a rich presence server which aggregates presence information from the media session manager, from each user presence agent, from each client of each user and from other presence information sources. The presence information of sessions is published to watchers of the session presence agent. These watchers may have subscribed permanently to associated sessions, or may be added based on the identity of the participants of the session. The watchers may include the participants in the session, their administrative assistants, their supervisors, logging applications, accounting applications, security applications, and media session management systems.

The session presence information may be filtered so only specific watchers of the session presence agent receive restricted rich presence information, for privacy, policy and security reasons.

The present invention permits implementation of several interesting use cases for multimedia session management such as, session presentation to inform the user of session events such as a session invitation (incoming call) on a session involving the user, that is watched by the user (my office and/or home phone and IM accounts as my buddies) on a presence user interface on a device (Personal Computer (PC), telephone, cellular phone, and the like) connected to a presence system. Another multimedia session management tool can be utilized such as session control, by interacting with the presence user interface, the user may optionally control the session management system through the client (click on session buddy line during session presentation to accept the invitation to join the session). Another case would be to allow remote viewing and control of multiple sessions from a client, such as for attendant stations, and for MLA telephony switch functions. The invention would extend the attendant and MLA functions beyond voice to a media session on a terminal (video, IM, application sharing). Additionally, the invention would allow integration of functionality, and facilitate user control of disparate telephony systems, such as PBXs, soft phone clients, fixed phones and mobiles via presence system infrastructures. Another case would associate session related information to the session as rich presence, so that new participant to the session (from a transfer or conference function) may also access the associated session information via a presence system, or transfer sessions to other users on the presence system.

In one embodiment of the invention a method for session presence comprises collecting presence information from a session, aggregating presence information from at least one presentity and publishing the presence information of the session as a session presentity to the at least one presentity. The collection of presence information from a session may be performed by a session presence agent; the aggregation of presence information is from a client of the at least one presentity. The method may additionally comprise the steps of managing a plurality of sessions between presentities, wherein the managing of a plurality of sessions between presentities may occur through a client. The method may include viewing remotely at least one session presentity through a client, controlling remotely at least one session presentity through a client, subscribing to the session presence agent as a session presence watcher, providing the session presentity information to the at least one presentity, integrating of presentities with disparate functionality to the session presence aggregation wherein presence information contains rich presence information and transferring the session presence to the at least one presentity.

In another embodiment of the invention a computer readable medium comprises instructions for linking a media session management system to a presence system and assigning session presentity to a session. The computer readable medium may also comprise instructions for viewing the session presentity on a client, controlling the session presentity on a client, aggregating presence information by a session presence agent and publishing presence information by a session presence agent.

In yet a further embodiment of the invention, a presence system enabled media session management system including a presence server for collecting presence information and distributing the presence information to one or more watchers, comprises a media session management system for managing a plurality of communication sessions between users and publishing presence information thereof, a session presence agent within the presence server in communication with the media session management system for collecting the published session presence information and the session presence agent further aggregating other presence information comprising at least one of user presence information, presence information from each client of each user, and from other presence information sources for each user, the aggregated presence information is provided to watchers subscribed to the session present agent as a session presence watcher. The system presence information may also comprise a filtering system to restrict the availability of secure information, a logging system to record session presence events and session associated data, and an accounting system to track costs associated with session usage.

### BRIEF DESCRIPTION OF THE DRAWINGS

Figure 1 depicts a first session presence system in accordance with a preferred embodiment of the present invention;
Figure 2 depicts a second session presence system in accordance with a preferred embodiment of the present invention;
Figure 3 depicts a session presence method flow block in accordance with a preferred embodiment of the present invention;
Figure 4 depicts a first session presence software flow block in accordance with a preferred embodiment of the present invention;
Figure 5 depicts a second session presence software flow block in accordance with a preferred embodiment of the present invention; and
Figure 6 depicts a third session presence system in accordance with a preferred embodiment of the present invention.

### DETAILED DESCRIPTION OF THE INVENTION

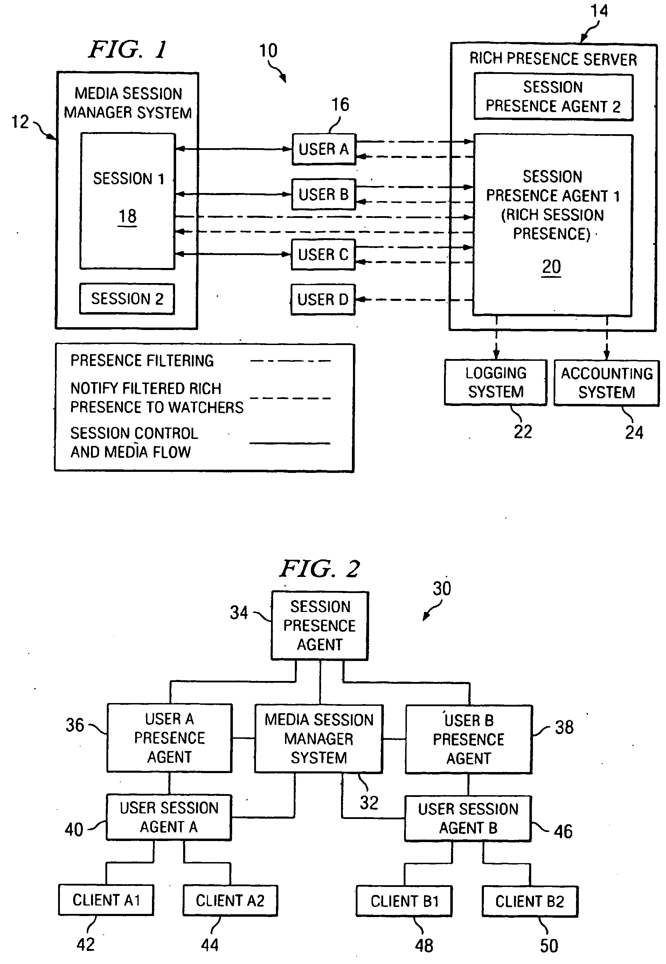

Referring now to FIG. 1, a first session presence system 10 is depicted and includes a number of modules such as a presence enabled media session management system 12 which includes a presence server 14 for collecting presence information and distributing the presence information to one or more watchers also known as users 16, a media session management system for managing a plurality of sessions 18 between users and publishing presence information thereof, a session presence agent 20 within the presence server in communication with the media session management system for collecting the published session presence information. The session presence agent 20 further aggregates other presence information comprising at least one of user presence information, presence information from each client of each user, and from other presence information sources for each user. The aggregated presence information is provided to watchers subscribed to the session present agent as a session presence watcher. The system may also include filtering function in the rich presence server 14 to restrict the availability of secure information, a logging system 22 to record session presence events and session associated data, and an accounting system 24 to track costs associated with session usage.

For example, the presence infrastructure may be accessed by a cellular phone, a PC with external wireless capability (such as a wireless card) or internal wireless capability (such as via 802.11 or any of the other 802 variants), by an Internet Protocol enabled device, or other electronic devices adapted to transmit and/or receive information to and/or from the presence infrastructure. These modules are software, hardware, firmware, and/or a combination of software, hardware, and/or firmware. The communications coupling occurs via at least one of the wireless protocol, the wired protocol and a combination of the wireless protocol and the wired protocol.

Referring now to FIG. 2, a second session presence system 30 is shown. A media session manager system 32 is in communication with a session presence agent 34 which in turn communicates with user A presence agent 36 and user B presence agent 38. The user A presence agent and user B presence agent are in communication with the media session manager system. Additionally the user A presence agent is in communication with user session agent A 40 which is in communication with clients A1 42 and A2 44. User B presence agent is in communication with user session agent B 46 which is in communication with clients B1 48 and B2 50. The user A session agent and user B session agent are also in communication with the media session manager system. The present invention links the media session management system with the presence system to assign a presentity to the media session itself. Assigning presentity status to the MSMS allows for session viewing and control through a presence system client. The modules in this figure are performed by software, hardware, firmware, and/or the combination of software, hardware, and/or firmware. The transfer of information of the information exchange state of the presence message occurs via at least one of a wireless protocol, a wired protocol and a combination of the wireless protocol and the wired protocol.

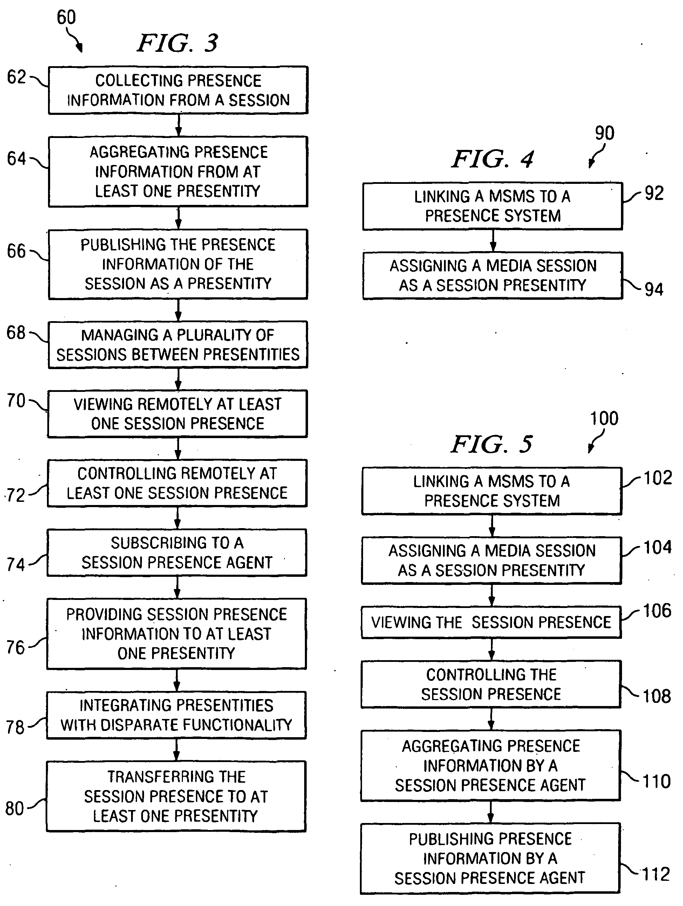

Referring now to FIG. 3, a flow block of the method of session presence 60 is shown. This method for session presence comprises collecting 62 presence information from a session, aggregating 64 presence information from at least one presentity and publishing 66 the presence information of the session as a session presentity to the at least one presentity. The collection of presence information from a session may be performed by a session presence agent the aggregation of presence information is from at least one of a presentity and a client of the at least one presentity. The method may additionally comprise the steps of managing 68 a plurality of communication sessions between presentities, wherein the managing of the plurality of communication sessions between presentities may occur through a client. The method may include viewing 70 remotely at least one session presence through a client, controlling 72 remotely at least one session presence through a client, subscribing 74 to a session presence agent as a session presence watcher, providing 76 the session presentity information to the at least one presentity, integrating 78 of presentities with disparate functionality to the session presence aggregation wherein presence information contains rich presence information and transferring 80 the session presence to the at least one presentity. For example, the presence infrastructure may be accessed by a cellular phone or a computer with external wireless capability (such as the wireless card) or internal wireless capability (such as 802.11 or any of the other 802 variants), by an Internet Protocol enabled device, or other electronic devices adapted to transmit and/or receive information to and/or from the presence infrastructure. The steps performed in this figure are performed by software, hardware, firmware, and/or the combination of software, hardware, and/or firmware. The transfer of information between agents and clients occurs via at least one of a wireless protocol, a wired protocol and the combination of the wireless protocol and the wired protocol.

Referring now to FIG. 4, a first software flow block of the method of session presence 90 is shown. A computer readable medium (or software) comprises instructions for linking 92 a media session management system to a presence system and assigning 94 session presentity to a session. The steps performed in this figure are performed by software, hardware, firmware, and/or the combination of software, hardware, and/or firmware. The transfer of information of the information exchange state of the presence message occurs via at least one of a wireless protocol, a wired protocol and a combination of the wireless protocol and the wired protocol.

Referring now to FIG. 5, a third software flow block of the method of session presence 100 is shown. A computer readable medium comprises instructions for linking 102 a media session management system to a presence system and assigning 104 session presentity to a session. The computer readable medium may also comprise instructions for viewing 106 the session presentity on a client, controlling 108 the session presentity on a client, aggregating 110 presence information by a session presence agent and publishing 112 presence information by a session presence agent. The steps performed in this figure are performed by software, hardware, firmware, and/or the combination of software, hardware, and/or firmware. The transfer of information of the information exchange state of the presence message occurs via at least one of a wireless protocol, a wired protocol and a combination of the wireless protocol and the wired protocol.

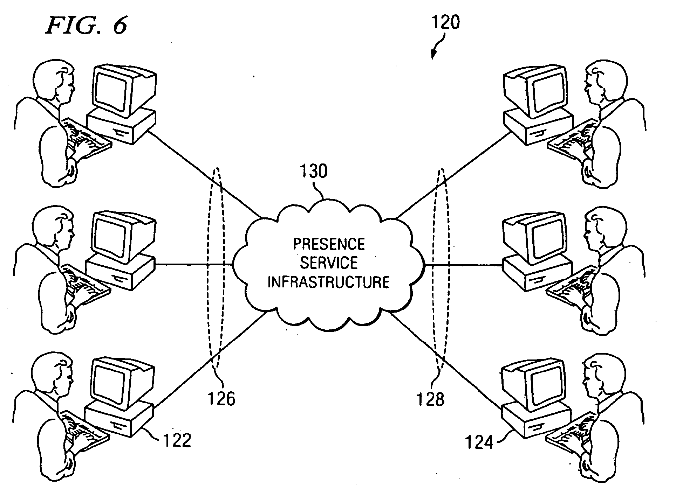

Referring now to FIG. 6, a system of session presence 120 is shown. The users 122, 124 are presentities 126 and 128 that interact with the session presentity 130. In this way the interaction broadens between the users and the session presence. For example, the presence infrastructure may be accessed by the cellular phone or a PC with external wireless capability (such as the wireless card) or internal wireless capability (such as 802.11 or any of the other 802 variants), or by the Internet Protocol enabled phone. Other devices may also communicate with the presence infrastructure. These modules are software, hardware, firmware, and/or the combination of software, hardware, and/or firmware. The communications coupling occurs via at least one of a wireless protocol, a wired protocol and a combination of the wireless protocol and the wired protocol.

The present invention includes computer readable medium or software that is preferably stored on the presence server. In other embodiments, the software of the present invention can be stored on the presentity, the watcher or a combination of at least two of the presence server, the presentity, and the watcher. Such a computer readable medium comprises instructions for performing the functionality described in relation to figures 1-6 and for assigning the presentity to the media session manager system.

Although the exemplary embodiment of the system of the present invention has been illustrated in the accompanied drawings and described in the foregoing detailed description, it will be understood that the invention is not limited to the embodiments disclosed, but is capable of numerous rearrangements, modifications, and substitutions without departing from the scope of the invention as set forth and defined by the following claims. For example, the capabilities of the invention can be performed fully and/or partially by one or more of the modules. Also, these capabilities may be performed in the current manner or in the distributed manner and on, or via, a device able to direct presence messages to targeted watchers. Further, although depicted in the particular manner, various modules may be repositioned without departing from the scope of the current invention. For example, some or all of the modules could be united into one of the modules or into a new module (not shown). Still further, although depicted in the particular manner, the greater or lesser number of users, watchers and presence infrastructures could be utilized.

Further, a lesser or greater number of information exchange states may be utilized with the present invention and such presence messages may include complementary information in order to accomplish the present invention, to provide additional features to the present invention, and/or to make the present invention more efficient.

The following features, separately or in any combination, may also constitute advantageous embodiments of the described or claimed invention:
- The claimed and/or described method comprising controlling remotely at least one session presence through a client.
- The claimed and/or described method comprising subscribing to the session presence agent as a session presence watcher.
- The claimed and/or described method comprising providing the session presentity information to the at least one presentity.
   10. The claimed and/or described method comprising integration of presentities with disparate functionality to the session presence aggregation.
- The claimed and/or described method wherein presence information contains rich presence information.
- The claimed and/or described method comprising transferring the session presence to the at least one presentity.
- The claimed and/or described computer readable medium comprising instructions for viewing the session presentity on a client.
- The claimed and/or described computer readable medium comprising instructions for controlling the session presentity on a client.
- The claimed and/or described computer readable medium comprising instructions for aggregating presence information by a session presence agent.
- The claimed and/or described computer readable medium comprising instructions for publishing presence information by a session presence agent.

## Claims

1. A method (60) of assigning presence in a presence system, comprising:
- collecting presence information; and
- aggregating (64) presence information from at least one presentity;
**characterized by**:
- assigning (94) a media session as a session presentity;
- collecting (62) presence information from the media session; and
- publishing (66) the presence information of the media session as said session presentity to a session presence watcher.

2. The method of claim 1 wherein the collection of presence information from the media session is performed by a session presence agent (20) in communication with a media session management system (18).

3. The method of any of the preceding claims wherein said media session comprises instant messaging, voice, video, document sharing or any combination thereof.

4. The method of claim 1 wherein the aggregation of presence information is from a client (A1) of the at least one presentity.

5. The method of claim 1 comprising managing (68) a plurality of sessions between presentities.

6. The method of claim 5 wherein the managing of a plurality of sessions between presentities may occur through the client.

7. The method of claim 1 comprising viewing remotely (70) at least one session presentity through the client.

8. A presence system (10) including a presence server (14) for collecting presence information and distributing the presence information to one or more watchers,
**characterized by**
- a media session management system (12) for managing a plurality of communication sessions between users (16) and publishing presence information thereof;
- a session presence agent (20) within the presence server in communication with the media session management system for collecting the published session presence information; and said session presence agent further aggregating other presence information comprising at least one of user presence information, presence information from each client of each user, and from other presence information sources for each user, said aggregated presence information provided to watchers subscribed to the session present agent as a session presence watcher.

9. The system of claim 8 further comprising a logging system (22) to record session presence events and session associated data.

10. The system of claim 8 further comprising an accounting system (24) to track session costs.

11. The system of claim 8 further comprising a filtering system to restrict the availability of secure information.

12. A computer readable medium comprising instructions for:
linking a media session management system to a presence system; and assigning session presence comprising the steps of claim 1.

## Patentansprüche

1. Verfahren (60) für das Zuweisen einer Präsenz in einem Präsenzsystem, umfassend:
- Sammeln von Präsenzinformationen; und
- Bündeln (64) der Präsenzinformationen mindestens einer Presentity;
**gekennzeichnet durch**:
- Zuweisen (94) einer Media-Sitzung als Sitzungs-Presentity;
- Sammeln (62) von Präsenzinformationen aus der Media-Sitzung; und
- Bekanntgabe (66) der Präsenzinformationen aus der Media-Sitzung als besagte Sitzungs-Presentity gegenüber einem Sitzungs-Präsenz-Watcher.

2. Verfahren nach Anspruch 1, wobei das Sammeln von Präsenzinformationen aus einer Media-Sitzung von einem Sitzungs-Präsenz-Agenten (20) in Kommunikation mit einem Media-Sitzungs-Verwaltungssystem (18) ausgeführt wird.

3. Verfahren nach einem beliebigen der vorstehenden Ansprüche, wobei besagte Media-Sitzung Sofortnachrichten, Sprechkommunikation, Video, die gemeinsame Nutzung von Dokumenten oder jede beliebige Kombination dieser Möglichkeiten umfasst.

4. Verfahren nach Anspruch 1, wobei das Bündeln von Präsenzinformationen einen Kunden (A1) mindestens einer Presentity betrifft.

5. Verfahren nach Anspruch 1, das Verwalten (68) einer Vielzahl von Sitzungen zwischen Presentities umfassend.

6. Verfahren nach Anspruch 5, wobei das Verwalten einer Vielzahl von Sitzungen zwischen Presentities über den Client erfolgen kann.

7. Verfahren nach Anspruch 1, das aus der Entfernung erfolgende Sichten (70) mindestens einer Sitzungs-Presentity durch den Client umfassend.

8. Präsenzsystem (10), einen Präsenzserver (14) für das Sammeln von Präsenzinformationen und das Verteilen der Präsenzinformationen auf einen oder mehrere Watcher umfassend, **gekennzeichnet durch**
- ein Media-Sitzungs-Verwaltungssystem (12) für die Verwaltung einer Vielzahl von Kommunikationssitzungen zwischen Benutzern (16) und für das Veröffentlichen der Präsenzinformationen aus diesen Sitzungen;
- einen Sitzungs-Präsenz-Agenten (20) innerhalb des Präsenzservers, der in Kommunikation steht mit dem Media-Sitzungs-Verwaltungssystem zwecks Sammelns der veröffentlichten Sitzungs-Präsenzinformationen; wobei besagter Sitzungs-Präsenz-Agent darüber hinaus weitere Präsenzinformationen bündelt, die mindestens entweder Benutzer-Präsenzinformationen, Präsenzinformationen eines jeden Clients eines jeden Benutzers oder Präsenzinformationen aus anderen Quellen von Präsenzinformationen für jeden Benutzer umfassen, wobei besagte gebündelte Präsenzinformationen den Watchers zur Verfügung gestellt werden, die beim Sitzungs-Präsenz-Agenten als Sitzungs-Präsenz-Watcher angemeldet sind.

9. System nach Anspruch 8, weiterhin ein Erfassungssystem (22) zum Aufzeichnen von Sitzungs-Präsenz-Ereignissen und einer Sitzung zugeordneten Daten umfassend.

10. System nach Anspruch 8, weiterhin ein Abrechnungssystem (24) zum Nachverfolgen der Sitzungs-Kosten umfassend.

11. System nach Anspruch 8, weiterhin ein Filtersystem für die Beschränkung der Verfügbarkeit geschützter Informationen umfassend.

12. Computerlesbares Medium, das Befehle umfasst für: das Verknüpfen eines Media-Sitzungs-Verwaltungssystems mit einem Präsenzsystem; und für das Zuweisen von Sitzungs-Präsenzen unter Anwendung der Schritte nach Anspruch 1.

## Revendications

1. Procédé (60) d'attribution de présence dans un système de présence, comprenant les étapes suivantes :
- collecter des informations de présence ; et
- regrouper (64) les informations de présence d'au moins une entité présente ;
**caractérisé par** les étapes suivantes :
- attribuer (94) une session multimédia en tant qu'entité présente de session ;
- collecter (62) des informations de présence auprès de la session multimédia ; et
- publier (66) les informations de présence de la session multimédia sous la forme de ladite entité présente à l'attention d'un observateur de présence de session.

2. Procédé selon la revendication 1, dans lequel la collecte des informations de présence auprès de la session multimédia est réalisée par un agent de présence de session (20) en communication avec un système de gestion de session multimédia (18).

3. Procédé selon l'une quelconque des revendications précédentes, dans lequel ladite session multimédia comprend la messagerie instantanée, la parole, la vidéo, le partage de documents ou toute combinaison de ceux-ci.

4. Procédé selon la revendication 1, dans lequel le regroupement des informations de présence s'effectue depuis un client (A1) de l'au moins une entité présente.

5. Procédé selon la revendication 1, comprenant la gestion (68) d'une pluralité de sessions entre les entités présentes.

6. Procédé selon la revendication 5, dans lequel la gestion d'une pluralité de sessions entre les entités présentes peut avoir lieu au travers du client.

7. Procédé selon la revendication 1, comprenant la visualisation à distance (70) d'au moins une entité présente de session au travers du client.

8. Système de présence (10) comprenant un serveur de présence (14) pour collecter des informations de présence et distribuer les informations de présence à un ou plusieurs observateurs,
**caractérisé par** :
- un système de gestion de session multimédia (12) destiné à gérer une pluralité de sessions de communication entre des utilisateurs (16) et publier des informations de présence de ceux-ci ;
- un agent de présence de session (20) à l'intérieur du serveur de présence en communication avec le système de gestion de session multimédia pour collecter les informations de présence de session publiées ; et ledit agent de présence de session regroupant en outre d'autres informations de présence comprenant au moins une parmi une information de présence d'utilisateur, une information de présence provenant de chaque client de chaque utilisateur, et provenant d'autres sources d'informations de présence pour chaque utilisateur, lesdites informations de présence regroupées étant fournies aux observateurs abonnés à l'agent de présence de session en tant qu'observateur de présence de session.

9. Système selon la revendication 8, comprenant en outre un système de journalisation (22) destiné à enregistrer des événements de présence de session et des données associées de session.

10. Système selon la revendication 8, comprenant en outre un système de comptabilisation (24) destiné à suivre les coûts de la session.

11. Système selon la revendication 8, comprenant en outre un système de filtrage destiné à restreindre la disponibilité d'informations sécurisées.

12. Support lisible par ordinateur comprenant des instructions pour :
lier un système de gestion de session multimédia à un système de présence ; et attribuer une présence de session comprenant les étapes de la revendication 1.
